# EUROPÄISCHE PATENTSCHRIFT

(11) **EP 2 310 231 B1**
(45) Veröffentlichungstag und Bekanntmachung des Hinweises auf die Patenterteilung: **01.07.2015**
(21) Anmeldenummer: 09757106.1
(22) Anmeldetag: 15.05.2009
(51) Int. Cl.: B60R 13/04

(54) **ZIERPROFIL, INSBESONDERE FÜR DEN FENSTERBEREICH EINES KRAFTFAHRZEUGS**
PROFILED DECORATIVE MOULDING, IN PARTICULAR FOR THE WINDOW AREA OF A MOTOR VEHICLE
PROFILÉ ENJOLIVEUR, NOTAMMENT POUR LA ZONE D'UNE VITRE DE VÉHICULE À MOTEUR

(30) Priorität: 05.06.2008 DE 102008026922
(43) Veröffentlichungstag der Anmeldung: 20.04.2011
(73) Patentinhaber: Henniges Automotive GmbH & Co. KG, 31547 Rehburg Loccum (DE)
(72) Erfinder: KREYE, Bernhard, 31515 Wunstorf (DE); SPIELMANN, Jörg, 59846 Sundern (DE)
(74) Vertreter: Jabbusch, Matthias
(86) Internationale Anmeldenummer: PCT/DE2009/000694
(87) Internationale Veröffentlichungsnummer: WO 2009/146672

(56) Entgegenhaltungen:
- EP-A1- 0 881 113
- US-A1- 2005 084 629
- US-B1- 6 174 477

## Beschreibung

Die Erfindung bezieht sich auf ein Zierprofil, insbesondere für den Fensterbereich eines Kraftfahrzeugs, mit einem vorzugsweise aus Kunststoff geformten Profilteil als Träger für wenigstens ein Zierelement, wobei ein vom Zierelement nicht bedeckter Bereich des Profilteils über dessen Seitenrand vorkragt, und der vorkragende Bereich des Profilteils als elastisch verformbare Lippe ausgebildet ist.

Zierprofile, insbesondere Zierprofile für den Fensterbereich eines Kraftfahrzeugs, bestehen üblicherweise aus Metall, z.B. aus Aluminium oder aus Stahl. An ihrer sichtseitigen Oberfläche weisen Zierprofile die entsprechenden Zierelemente auf. Dies können z.B. polierte oder verchromte Flächenbereiche der Zierprofile selbst sein, oder auch vorgefertigte Metallteile mit entsprechend gestalteter sichtseitiger Oberfläche, mit denen ein z.B. aus Kunststoff geformtes Profilteil ausgerüstet ist.

Jedes Zierprofil ist somit entweder eine aus Zierelement und Profilteil zusammengesetzte Baueinheit oder ein einteiliges, vorgefertigtes Bauteil, beispielsweise eine Zierleiste. Das somit entweder als vorgefertigtes Bauteil oder als ebenfalls aus vorgefertigten Elementen zusammengesetzte Baueinheit vorliegende Zierprofil, kann im Fensterbereich an der ihm zugedachten Stelle montiert bzw. befestigt werden.

Ein mehrteiliges Zierprofil nach dem Oberbegiff des Anspruchs 1 ist aus der EP 0 881 113 A1 bekannt. Dort wird an ein extrudiertes Profilteil ein Zierkörper angebracht, wobei der Zierkörper aus einem Träger und aus einer mehrlagigen Zierschicht ausgebildet ist. Dieses Zierprofil besteht somit aus mehreren Bauteilen, die in mehreren Arbeitsschritten miteinander zu verbinden sind.

Ein Zierprofil aus Metall bedingt sowohl hinsichtlich seiner Herstellung, als auch hinsichtlich seiner Befestigung im Fensterbereich eines Kraftfahrzeuges, nicht unerhebliche Aufwendungen an Kosten, sowohl für Material, als auch für Lohn.

Der Nachteil eines erhöhten Kostenaufwandes ergibt sich ebenfalls bei Zierelementen aus Metall, die mit einem Profilteil zu einer ein Zierprofil bildenden Baueinheit verbunden sind, wobei die Montage des beispielsweise als Zierleiste aus Metall vorliegenden Zierelements an einem Profilteil, das z.B. aus Kunststoff besteht, als weiterer, zusätzlicher Kostenfaktor anzusehen ist.

Ein Zierprofil dieser Gattung ist in der EP 0 881 113 A1 beschrieben.

Der Erfindung liegt die Aufgabe zugrunde, auf dem Gebiet der Verwendung von Zierprofilen im Fensterbereich eines Kraftfahrzeugs, Kosteneinsparungen zu erreichen, ohne dabei nachteilige Beeinträchtigungen des optischen Erscheinungsbildes eines Zierprofils bzw. einer Zierleiste in Kauf nehmen zu müssen.

Diese Aufgabe ist erfindungsgemäß durch die Merkmale des Patentanspruchs 1 gelöst.

Weiterbildungen und vorteilhafte Ausgestaltungen ergeben sich aus den Ansprüchen 2 bis 8.

Durch die Hinterspritzung des Zierelements bzw. der Zierelemente wird das Zierprofil ausgebildet. Das Zierprofil ist somit ein aus Kunststoff gespritztes Profilteil, an dessen sichtseitiger Oberfläche wenigstens eins der Zierelemente angeordnet ist.

Während der Ausbildung des Profilteils durch Hinterspritzen des Zierelements, entsteht somit das jeweilige Zierprofil, bzw. wird das jeweilige Zierprofil durch die Hinterspritzung des Zierelements ausgebildet.

Eine Vorfertigung eines Profilteils, welches es anschließend mit wenigstens einem Zierelement zusammenzufügen gilt, um das Zierprofil auszubilden, entfällt, so dass ein dadurch bedingte Kostenfaktor nicht gegeben ist.

Gemäß der Erfindung wird lediglich ein vorgefertigtes Zierelement in eine Spritzform einer Spritzanlage bzw. Spritzmaschine eingelegt und mit Kunststoff hinterspritzt. Nach Öffnen der Spritzform kann das geformte Zierprofil bzw. die geformte Zierleiste entnommen und einer Weiterverwendung, z.B. der Montage im Fensterbereich eines Kraftfahrzeugs, zugeführt werden.

Eine erhebliche Verminderung der Herstellungskosten für das Zierprofil ergibt sich mit besonderem Vorteil des weiteren auch noch dadurch, daß jedes Zierelement ein Zuschnitt aus einer Folie ist. Folien mit metallischer Beschichtung bieten das optische Aussehen einer metallischen sichtseitigen Oberfläche, wobei eine Folienstärke von z.B. 0,1 bis 0,4 mm bei der Herstellung eines Zierprofils erheblich günstiger ist als die Verarbeitung einer Zierleiste aus Blech mit z.B. 1 mm Materialstärke.

Derartig dünne Zierelemente können in vorteilhafter Weise übliche Zierelemente aus Metall, bzw. Metallblech ohne weiteres ersetzen. Erfindungsgemäß werden die entsprechend zugeschnittenen Folienabschnitte mit thermoplastischem Werkstoff, z.B. PC, PP, PA, PMMA, ABS usw. hinterspritzt, womit das Zierprofil danach einbaubereit vorgefertigt vorliegt.

Werden Zierprofile im Fensterbereich montiert, ist oftmals ein Ausgleich bezüglich des Abstandes zwischen der Oberfläche im Fensterbereich, an der das Zierprofil befestigt ist, und der dieser Oberfläche zugekehrten Seite des Zierprofils erforderlich.

Es ist üblich, für derartige Ausgleichsmaßnahmen besondere Ausgleichslippen vorzusehen, die aus elastisch verformbarem und somit leicht an die jeweilige Oberfläche anschmiegbaren Werkstoff bestehen.

Eine Lippe kann auch dadurch elastisch verformbar gestaltet werden, dass sie besonders dünn und damit leicht biegbar.

Bei dem erfindungsgemäßen Zierprofil wird die als Ausgleichselement dienende, elastisch verformbare Lippe bei der Hinterspritzung des Zierelements gleichzeitig oder in einer nachfolgenden Bearbeitungsstufe ausgeformt, d.h., die Ausformung des Profilteils und der elastischen Ausgleichslippen erfolgt in dem Arbeitsgang der Hinterspritzung der als Zierelement dienenden Folie, entweder zeitgleich oder leicht zeitversetzt.

Selbstverständlich ist es auch möglich, die elastisch verformbare Lippe in einen separaten Arbeitsgang an das durch Hinterspritzen der Folie bereits hergestellte Profilteil nachträglich anzuspritzen.

Besonders vorteilhaft ist es jedoch, ein sogenanntes 2-Komponenten-Spritzverfahren einzusetzen, dabei wird die Folie in einem ersten Schritt mit der Kunststoffkomponente für das Profilteil hinterspritzt und in einem zweiten Schritt wird dann eine weiche Kunststoffkomponente für die elastisch verformbaren Lippen, die Ausgleichslippen, an die Hinterspritzung gespritzt. Dafür können PVC, TPE, Gummi oder PU in Frage kommen.

Das Hinterspritzen der Folie mit Kunststoffen, die unterschiedliche Härte aufweisen, kann somit in zwei Stufen erfolgen, ist jedoch auch, wie bereits erwähnt, zeitgleich mittels sogenannter Mehrfachspritzanlagen ohne weiteres ausführbar.

Das wie vorbeschrieben durch Hinterspritzen des Zierelements entstandene Zierprofil ist in vorteilhafter Weise mittels verbindender Hilfsmittel an einer dafür vorgesehenen Stelle des Fensterbereiches befestigbar. An dem Glas einer Fensterscheibe könnte das erfindungsgemäße Zierprofil z.B. mittels einer Direktverklebung befestigt werden, wenn das verbindende Hilfsmittel einen Kleber aufweist.

Es ist selbstverständlich auch möglich, das erfindungsgemäß ausgebildete Profilteil mit bei seiner Ausformung, die durch Hinterspritzen des Zierelements erfolgt, gleichzeitig mitgeformten Formschlusselementen auszurüsten. Diese können mit passenden Formelementen eines vorgefertigten Zwischenhalters, beispielsweise eines extrudierten Halterprofils, verrastet bzw. verclipst werden.

Der Zwischenhalter bzw. das Zwischenhalterprofil, kann wiederum an der vorbestimmten Stelle im Fensterbereich mit einem Kleber befestigt werden.

Selbstverständlich können alle üblichen, bekannten Befestigungstechniken als verbindende Hilfsmittel verwendet werden. Besonders vorteilhaft ist die Nutzung bzw. Verwendung des erfindungsgemäßen Zierprofils in Verbindung mit einer Schachtleiste eines Fahrzeugfensters.

Schachtleisten sind üblicherweise im Extrusionsverfahren hergestellte Profile mit einer eingelegten Kernleiste aus Metall.

Die Erfindung ermöglicht nunmehr die Ausrüstung solcher Schachtleisten mit Zierprofilen in besonders kostengünstiger Weise, indem ein erfindungsgemäßes Zierprofil an der Schachtleiste mit Kleber befestigt wird. Statt eines pastenförmigen Kleberauftrags ist auch eine Verklebung mit doppelseitigem Klebeband ohne weiteres möglich.

Ein Ausführungsbeispiel der Erfindung, aus dem sich weitere erfinderische Merkmale ergeben, ist in der Zeichnung dargestellt. Es zeigen:
- Fig. 1:: eine Seitenansicht eines Fensterbereichs eines Kraftfahrzeugs im Schnitt, mit einem an der Glasscheibe des Fensters befestigten Zierprofil gemäß einer ersten Ausführung und
- Fig. 2:: eine Seitenansicht einer Schachtleiste eines Fensterbereichs im Schnitt, wobei an der Schachtleiste ein Zierprofil gemäß einer zweiten Ausführung befestigt ist.

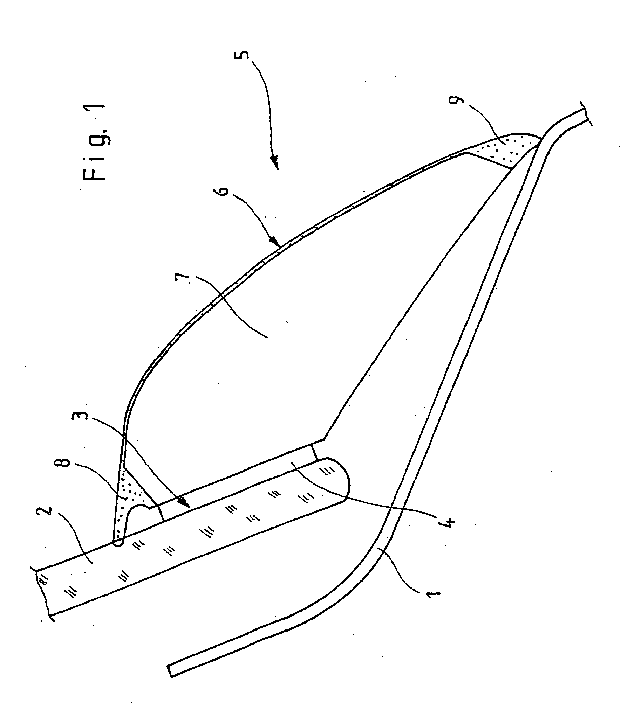

Fig. 1 zeigt die Seitenansicht eines Fensterbereichs eines Kraftfahrzeugs schematisch im Schnitt. Der einen Fensterrand bildende Karosserieflansch in der Karosserie ist mit 1 bezeichnet. In die vom Karosserieflansch 1 eingefasste bzw. begrenzte Fensteröffnung ist eine Fensterscheibe 2 aus Glas eingesetzt. Mittels verbindendem Hilfsmittel 3, welches bei diesem Ausführungsbeispiel ein Kleber 4 ist, ist an der Fensterscheibe 2 ein Zierprofil 5 befestigt. Das Zierprofil 5 besteht aus einem Zierelement 6 mit einem Profilteil 7 aus Kunststoff hinterspritzt ist. Durch die Hinterspritzung des Zierelements 6 mit einem Kunststoff, ist das Profilteil 7 des Zierprofils 5 ausgebildet. An den beiden Seitenrändern des Profilteils 7 des Zierprofil 5 sind elastisch verformbare Lippen 8 und 9 als Ausgleichslippen zum Ausgleich des Abstandes zur Fensterscheibe 2 und zum Karosserieflansch 1 angeordnet. Jede elastisch verformbare Lippe 8 bzw. 9 ist ebenfalls als eine Anspritzung an das Profilteil 7 ausgebildet.

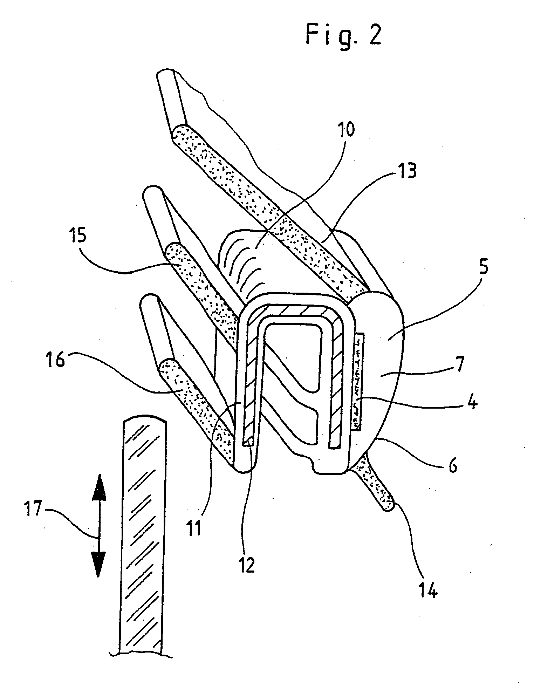

Fig. 2 zeigt eine Ausführung eines Fensterbereichs eines Kraftfahrzeugs, der mit einer Schachtleiste 11 ausgerüstet ist, im Schnitt. Die Schachtleiste ist ein extrudiertes Profil mit einem Einleger 12 aus Metall.

Außen an die Schachtleiste 10 ist ein Zierprofil 5 mit Kleber 4 befestigt, wobei das Profilteil 7 des Zierprofils 5 hier wiederum als eine Hinterspritzung des Zierelements 6 vorliegt. Mit 13 und 14, sowie 15 und 16 sind wieder, ebenfalls als Anspritzung ausgebildete, elastisch verformbare Lippen, bezeichnet. An die Fensterscheibe 2, die sich in Richtung des Doppelpfeils 17 bewegen lässt, können sich die elastisch verformbaren Lippen 13, 15 und 16 gegebenenfalls abdichtend anlegen bzw. schmiegen.

Die Besonderheit der Zierprofile 5 gemäß Fig. 1 und Fig. 2 liegt darin, dass jedes Zierelement ein vorbereiter Zuschnitt aus einer Folie ist, die relativ dünn sein kann.

## Patentansprüche

1. Zierprofil, insbesondere für den Fensterbereich eines Kraftfahrzeugs, mit einem aus Kunststoff geformten Profilteil (7) als Träger für wenigstens ein Zierelement (6), wobei ein vom Zierelement (6) nicht bedeckter Bereich des Profilteils (7) über dessen Seitenrand vorkragt, und der vorkragende Bereich des Profilteils (7) als elastisch verformbare Lippe (8; 9) ausgebildet ist,
**dadurch gekennzeichnet,**
**dass** jedes Zierelement (6) ein Zuschnitt aus einer Folie ist und das Profilteil (7) ein Spritzkörper aus dem Kunststoff ist.

2. Zierprofil nach Anspruch 1, **dadurch gekennzeichnet, dass** jede elastisch verformbare Lippe als eine Anspritzung des Profilteils ausgebildet ist.

3. Zierprofil nach einem der Ansprüche 1 bis 2, **dadurch gekennzeichnet, dass** das Profilteil eine harte und eine weiche Werkstoffkomponente aufweist, wobei jede Lippe aus der weichen Werkstoffkomponente gebildet ist.

4. Zierprofil nach einem der Ansprüche 1 bis 3, **dadurch gekennzeichnet, dass** das hinterspritzte Profilteil (7) mittels verbindender Hilfsmittel (3) an einer dafür vorgesehenen Stelle des Fensterbereichs befestigt ist.

5. Zierprofil nach Anspruch 4, **dadurch gekennzeichnet, dass** jede Stelle ein Teil einer Fläche an der Sichtseite einer in Fensterbereich angeordneten Schachtleiste (10) ist.

6. Zierprofil nach Anspruch 4, **dadurch gekennzeichnet, dass** jede Stelle ein vorbestimmter Teil einer Oberfläche einer Fensterscheibe (2) aus Glas für ein Kraftfahrzeugfenster ist.

7. Zierprofil nach einem der Ansprüche 2 bis 4, **dadurch gekennzeichnet, dass** jedes verbindende Hilfsmittel (3) einen Kleber (4) aufweist.

8. Zierprofil nach einem der Ansprüche 4 bis 7, **dadurch gekennzeichnet, dass** jedes verbindende Hilfsmittel (3) gegenseitig verrastbare Formschlusselemente aufweist, die an dem Profilteil (7) einerseits und an einem vorgefertigten Zwischenhalter andererseits angeordnet sind, wobei der Zwischenhalter an der vorbestimmten Stelle im Fensterbereich mit einem Kleber (4) befestigt ist.

## Claims

1. A trim profile, in particular for the window region of a motor vehicle, having a profile part (7), which is moulded from plastic, as the support for at least one trim element (6), a region of the profile part (7) that is not covered by the trim element (6) projecting beyond the side edge thereof, and the projecting region of the profile part (7) being formed as an elastically deformable lip (8; 9),
**characterised in that**
each trim element (6) is a blank consisting of a foil, and the profile part (7) is an injection-moulded body consisting of the plastic.

2. The trim profile according to claim 1, **characterised in that** each elastically deformable lip is formed as a moulding on the profile part.

3. The trim profile according to any one of claims 1 to 2, **characterised in that** the profile part has a hard and a soft material component, wherein each lip is formed from the soft material component.

4. The trim profile according to any one of claims 1 to 3, **characterised in that** the profile part (7) moulded behind is fastened to a location provided therefor of the window region by means of connection aids (3).

5. The trim profile according to claim 4, **characterised in that** each location is a part of a face on the visible side of a weather strip (10) arranged in the window region.

6. The trim profile according to claim 4, **characterised in that** each location is a predefined part of a surface of a glass window pane (2) for a motor vehicle window.

7. The trim profile according to any one of claims 2 to 4, **characterised in that** each connection aid (3) has an adhesive (4).

8. The trim profile according to any one of claims 4 to 7, **characterised in that** each connection aid (3) has form-fitting elements, which can lock into each other and are arranged on the profile part (7) on one side and on a prefabricated intermediate holder on the other side, wherein the intermediate holder is fastened to the predefined location in the window region with an adhesive (4).

## Revendications

1. Profilé décoratif, en particulier pour la zone de fenêtre d'un véhicule, avec une pièce profilée (7) moulée en plastique en tant que support pour au moins un élément décoratif (6), une zone non couverte par l'élément décoratif (6) de la pièce profilée (7) faisant saillie au-dessus de son bord latéral et la zone en saillie de la pièce profilée (7) étant constituée comme une lèvre (8 ; 9) élastiquement déformable,
**caractérisé en ce que**
chaque élément décoratif (6) est une découpe d'une feuille et la pièce profilée (7) est un corps injecté à partir de 0plastique.

2. Profilé décoratif selon la revendication 1, **caractérisé en ce que** chaque lèvre élastiquement déformable est constituée comme une injection de la pièce profilée.

3. Profilé décoratif selon une quelconque des revendications 1 à 2, **caractérisé en ce que** la pièce profilée comporte un composant de matériau dur et un composant de matériau mou, chaque lèvre étant formée à partir du composant de matériau mou.

4. Profilé décoratif selon une quelconque des revendications 1 à 3, **caractérisé en ce que** la pièce profilée (7) injectée en décoration est fixée par l'intermédiaire d'un moyen auxiliaire (3) de raccordement à un point prévu à cet effet de la zone de fenêtre.

5. Profilé décoratif selon la revendication 4, **caractérisé en ce que** chaque point est une partie d'une surface sur le côté visible d'une moulure de logement (10) disposée dans la zone de fenêtre.

6. Profilé décoratif selon la revendication 4, **caractérisé en ce que** chaque point est une partie prédéfinie d'une surface d'une vitre de fenêtre (2) en verre pour une fenêtre de véhicule.

7. Profilé décoratif selon une quelconque des revendications 2 à 4, **caractérisé en ce que** chaque moyen auxiliaire (3) de raccordement comporte une colle (4).

8. Profilé décoratif selon une quelconque des revendications 4 à 7, **caractérisé en ce que** chaque moyen auxiliaire (3) de raccordement comporte des éléments à complémentarité de forme réciproquement enclenchables qui sont disposés sur la pièce profilée (7) d'une part et sur un support intermédiaire préfabriqué d'autre part, le support intermédiaire étant fixé avec une colle (4) au point prédéfini dans la zone de fenêtre.
